# EUROPEAN PATENT APPLICATION

(11) **EP 4 503 710 A1**
(43) Date of publication of application: **05.02.2025**
(21) Application number: 23773915.6
(22) Date of filing: 22.03.2023
(51) Int. Cl.: H04W 24/04

(54) **DATA TRANSMISSION METHOD AND APPARATUS, TERMINAL, AND NETWORK SIDE DEVICE**

(30) Priority: 24.03.2022 CN 202210303689
(71) Applicant: VIVO MOBILE COMMUNICATION CO., LTD., Dongguan, Guangdong 523863 (CN)
(72) Inventor: ZHENG, Qian, Dongguan, Guangdong 523863 (CN); LIU, Jiamin, Dongguan, Guangdong 523863 (CN); KIMBA DIT ADAMOU, Boubacar, Dongguan, Guangdong 523863 (CN)
(74) Representative: Lavoix
(86) International application number: PCT/CN2023/083082
(87) International publication number: WO 2023/179668

(57) **Abstract**

This application pertains to the field of communication technologies, and discloses a data transmission method and apparatus, a terminal, and a network-side device. The data transmission method in embodiments of this application includes: transmitting, by a first terminal, user plane data and/or control plane data with a network-side device through multiple paths, where the multiple paths include at least a first path and a second path, where the first path is a direct path in which the first terminal directly communicates with the network-side device, and the second path is an indirect path in which the first terminal communicates with the network-side device through a second terminal; or the first path is an indirect path in which the first terminal communicates with the network-side device through a second terminal, and the second path is a direct path in which the first terminal directly communicates with the network-side device.

## Description

### CROSS-REFERENCE TO RELATED APPLICATIONS

This application claims priority to Chinese Patent Application No. 202210303689.X, filed in China on March 24, 2022, which is incorporated herein by reference in its entirety.

### TECHNICAL FIELD

This application pertains to the field of communication technologies, and specifically relates to a data transmission method and apparatus, a terminal, and a network-side device.

### BACKGROUND

In the related art, only a single-path connection can be established between a terminal and a network-side device. For example, a direct path may be established with the network-side device, or an indirect path may be established with the network-side device. Throughput of the single-path connection is limited, and reliability needs to be improved.

### SUMMARY

Embodiments of this application provide a data transmission method and apparatus, a terminal, and a network-side device, to improve throughput and reliability of communication transmission.

According to a first aspect, a data transmission method is provided and includes:
transmitting, by a first terminal, user plane data and/or control plane data with a network-side device through multiple paths, where
the multiple paths include at least a first path and a second path, where the first path is a direct path in which the first terminal directly communicates with the network-side device, and the second path is an indirect path in which the first terminal communicates with the network-side device via a second terminal; or
the first path is an indirect path in which the first terminal communicates with the network-side device via a second terminal, and the second path is a direct path in which the first terminal directly communicates with the network-side device.

According to a second aspect, a data transmission apparatus is provided and includes:
a first transmission module, configured to transmit user plane data and/or control plane data with a network-side device through multiple paths, where
the multiple paths include at least a first path and a second path, where the first path is a direct path in which a first terminal directly communicates with the network-side device, and the second path is an indirect path in which the first terminal communicates with the network-side device via a second terminal; or
the first path is an indirect path in which a first terminal communicates with the network-side device via a second terminal, and the second path is a direct path in which the first terminal directly communicates with the network-side device.

According to a third aspect, a data transmission method is provided and includes:
transmitting, by a network-side device, user plane data and/or control plane data with a first terminal through multiple paths, where
the multiple paths include at least a first path and a second path, where the first path is a direct path in which the first terminal directly communicates with the network-side device, and the second path is an indirect path in which the first terminal communicates with the network-side device via a second terminal; or
the first path is an indirect path in which the first terminal communicates with the network-side device via a second terminal, and the second path is a direct path in which the first terminal directly communicates with the network-side device.

According to a fourth aspect, a data transmission apparatus is provided and includes:
a second transmission module, configured to transmit user plane data and/or control plane data with a first terminal through multiple paths, where
the multiple paths include at least a first path and a second path, where the first path is a direct path in which the first terminal directly communicates with a network-side device, and the second path is an indirect path in which the first terminal communicates with the network-side device via a second terminal; or
the first path is an indirect path in which the first terminal communicates with a network-side device via a second terminal, and the second path is a direct path in which the first terminal directly communicates with the network-side device.

According to a fifth aspect, a terminal is provided. The terminal includes a processor and a memory. The memory stores a program or instructions capable of running on the processor. When the program or instructions are executed by the processor, the steps of the method according to the first aspect are implemented.

According to a sixth aspect, a terminal is provided and includes a processor and a communication interface. The communication interface is configured to transmit user plane data and/or control plane data with a network-side device through multiple paths, where
the multiple paths include at least a first path and a second path, where the first path is a direct path in which a first terminal directly communicates with the network-side device, and the second path is an indirect path in which the first terminal communicates with the network-side device via a second terminal; or
the first path is an indirect path in which a first terminal communicates with the network-side device via a second terminal, and the second path is a direct path in which the first terminal directly communicates with the network-side device.

According to a seventh aspect, a network-side device is provided. The network-side device includes a processor and a memory. The memory stores a program or instructions capable of running on the processor. When the program or instructions are executed by the processor, the steps of the method according to the third aspect are implemented.

According to an eighth aspect, a network-side device is provided and includes a processor and a communication interface. The communication interface is configured to transmit user plane data and/or control plane data with a first terminal through multiple paths, where
the multiple paths include at least a first path and a second path, where the first path is a direct path in which the first terminal directly communicates with the network-side device, and the second path is an indirect path in which the first terminal communicates with the network-side device via a second terminal; or
the first path is an indirect path in which the first terminal communicates with the network-side device via a second terminal, and the second path is a direct path in which the first terminal directly communicates with the network-side device.

According to a ninth aspect, a data transmission system is provided and includes a network-side device and a terminal. The network-side device may be configured to perform the steps of the foregoing data transmission method according to the third aspect. The terminal may be configured to perform the steps of the foregoing data transmission method according to the first aspect.

According to a tenth aspect, a readable storage medium is provided. The readable storage medium stores a program or instructions. When the program or instructions are executed by a processor, the steps of the method according to the first aspect are implemented, or the steps of the method according to the third aspect are implemented.

According to an eleventh aspect, a chip is provided. The chip includes a processor and a communication interface. The communication interface is coupled to the processor. The processor is configured to run a program or instructions to implement the method according to the first aspect or implement the method according to the third aspect.

According to a twelfth aspect, a computer program or program product is provided. The computer program or program product is stored in a storage medium. The computer program or program product is executed by at least one processor to implement the data transmission method according to the first aspect or implement the steps of the data transmission method according to the third aspect.

In the embodiments of this application, a multi-path establishment procedure may be performed between the first terminal and the network-side device, and duplicated or split signaling and service data may be transmitted between the first terminal and the network-side device through the multiple paths. Therefore, throughput of communication transmission can be improved by increasing transmission paths, and when link quality of one path is poor, reliability of transmission can be ensured by using the other path with better link quality.

### BRIEF DESCRIPTION OF DRAWINGS

FIG. 1 is a block diagram of a wireless communication system to which an embodiment of this application may be applied;
FIG. 2 is a schematic diagram of a relay scenario;
FIG. 3 is a schematic diagram of a sidelink relay (Sidelink Relay, SL relay) architecture;
FIG. 4 is a schematic diagram of a non-SL relay architecture;
FIG. 5 is a schematic flowchart of a data transmission method on a first terminal side according to an embodiment of this application;
FIG. 6 is a schematic flowchart of a data transmission method on a network-side device side according to an embodiment of this application;
FIG. 7 is a schematic diagram of a structure of a data transmission apparatus on a first terminal side according to an embodiment of this application;
FIG. 8 is a schematic diagram of a structure of a data transmission apparatus on a network-side device side according to an embodiment of this application;
FIG. 9 is a schematic diagram of a structure of a communication device according to an embodiment of this application;
FIG. 10 is a schematic diagram of a structure of a terminal according to an embodiment of this application; and
FIG. 11 is a schematic diagram of a structure of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and/or" in the specification and claims indicates at least one of connected objects, and the character "/" generally represents an "or" relationship between associated objects.

It should be noted that technologies described in the embodiments of this application are not limited to a long term evolution (Long Term Evolution, LTE)/LTE-Advanced (LTE-Advanced, LTE-A) system, and can also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. The described technologies may be used for the foregoing systems and radio technologies, and may also be used for other systems and radio technologies. However, in the following descriptions, the new radio (New Radio, NR) system is described for an illustrative purpose, and NR terms are used in most of the following descriptions. These technologies may also be applied to other applications than an NR system application, for example, a 6th Generation (6th Generation, 6G) communication system.

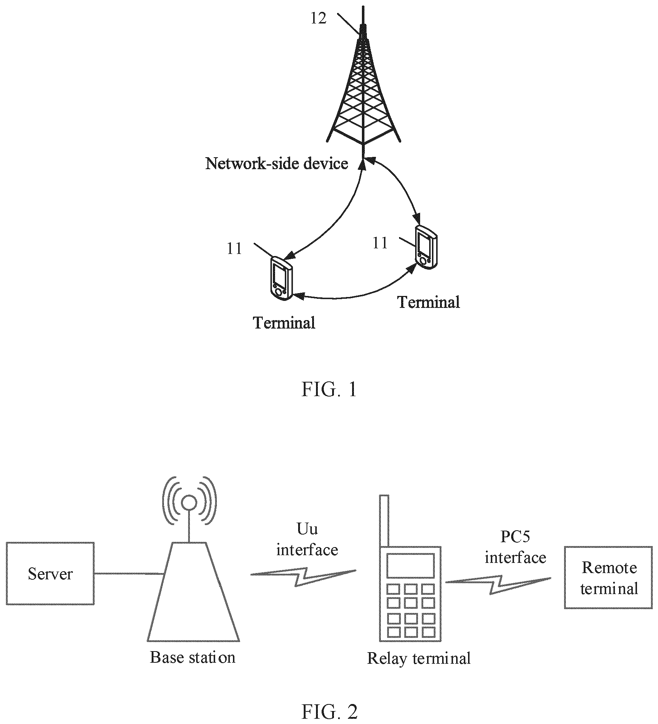

FIG. 1 is a block diagram of a wireless communication system to which an embodiment of this application may be applied. The wireless communication system includes a terminal 11 and a network-side device 12. The terminal 11 may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR) or virtual reality (virtual reality, VR) device, a robot, a wearable device (Wearable Device), vehicle user equipment (Vehicle User Equipment, VUE), pedestrian user equipment (Pedestrian User Equipment, PUE), a smart home (a home device having a wireless communication function, such as a refrigerator, a television, a washing machine, or furniture), a game console, a personal computer (personal computer, PC), a teller machine, or a self-service machine. The wearable device includes a smartwatch, a smart band, a smart headphone, smart glasses, smart j ewelry (a smart bracelet, a smart wrist chain, a smart ring, a smart necklace, a smart anklet, a smart ankle chain, or the like), a smart wristband, smart clothing, or the like. It should be noted that a specific type of the terminal 11 is not limited in the embodiments of this application. The network-side device 12 may include an access network device or a core network device. The access network device may also be referred to as a radio access network device, a radio access network (Radio Access Network, RAN), a radio access network function, or a radio access network element. The access network device may include a base station, a wireless local area network (Wireless Local Area Network, WLAN) access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmission and Reception Point, TRP), or another appropriate term in the art. As long as the same technical effect is achieved, the base station is not limited to specific technical terms. It should be noted that in the embodiments of this application, only a base station in an NR system is used as an example for description, but a specific type of the base station is not limited.

A relay (Relay) technology in a wireless communication system is to add, between a base station and a terminal, one or more relay nodes responsible for forwarding a radio signal once or more times, that is, the radio signal needs to go through multiple hops before arriving at the terminal.

The wireless relay technology can not only be used to expand cell coverage and compensate for a blind spot of cell coverage, but also increase a cell capacity through spatial resource reuse. For indoor coverage, the relay technology can also overcome a penetration loss and improve quality of indoor coverage.

Using simple two-hop relay as an example, wireless relay is to split a base station-terminal link into two links: base station-relay station and relay station-terminal. Therefore, there is an opportunity to replace one poor-quality link with two high-quality links to obtain a higher link capacity and better coverage.

Currently, supported relay is UE-to-network relay (UE-to-Network relay), that is, one end of the relay is connected to UE and the other end is connected to a network side. The UE connected to the relay is referred to as remote UE (Remote UE).

Atypical relay scenario is shown in FIG. 2, and it is a typical UE-to-network scenario. The remote UE needs to transmit data with the network side, but due to poor coverage, the remote UE finds relay UE as the relay, where a Uu interface exists between the relay UE and the base station, and a sidelink (PC5) interface exists between the relay UE and the remote UE. Generally, the relay UE is open and can serve any remote UE.

In the related art, a procedure for establishing a radio resource control (Radio Resource Control, RRC) connection by remote UE includes the following steps.
Step 1: The remote UE performs a discovery (discovery) process with relay UE, and then establishes a PC5 RRC connection.
Step 2: The remote UE sends an RRC Setup Request message to a base station, and the base station returns an RRC Setup message to the remote UE. Specifically, the two messages are forwarded by the relay UE to the base station or the remote UE.
Step 3: A signaling radio bearer 1 (Signaling Radio Bearer 1, SRB 1) dedicated bearer is established between the base station and the remote UE, where the SRB 1 dedicated bearer for the remote UE includes two radio link control (Radio Link Control, RLC) channels: PC5 (between the remote UE and the relay UE) and Uu (between the relay UE and the base station). Specifically, the two RLC channels are used for the remote UE to send/receive an RRC message of an SRB 1 type to/from the base station.
Step 4: The remote UE sends a radio resource control setup complete (RRC Setup Complete) message to the base station. Specifically, the message is forwarded by the relay UE to the base station.
Step 5: Security is activated between the remote UE and the base station.
Step 6: An SRB 2 or a data radio bearer (Data Radio Bearer, DRB) dedicated bearer is established between the base station and the remote UE, where the SRB 2/DRB dedicated bearer for the remote UE includes two RLC channels: PC5 (between the remote UE and the relay UE) and Uu (between the relay UE and the base station). Specifically, the two RLC channels are used for the remote UE to send/receive an RRC/NAS message and uplink/downlink service data of an SRB 2 type to/from the base station.

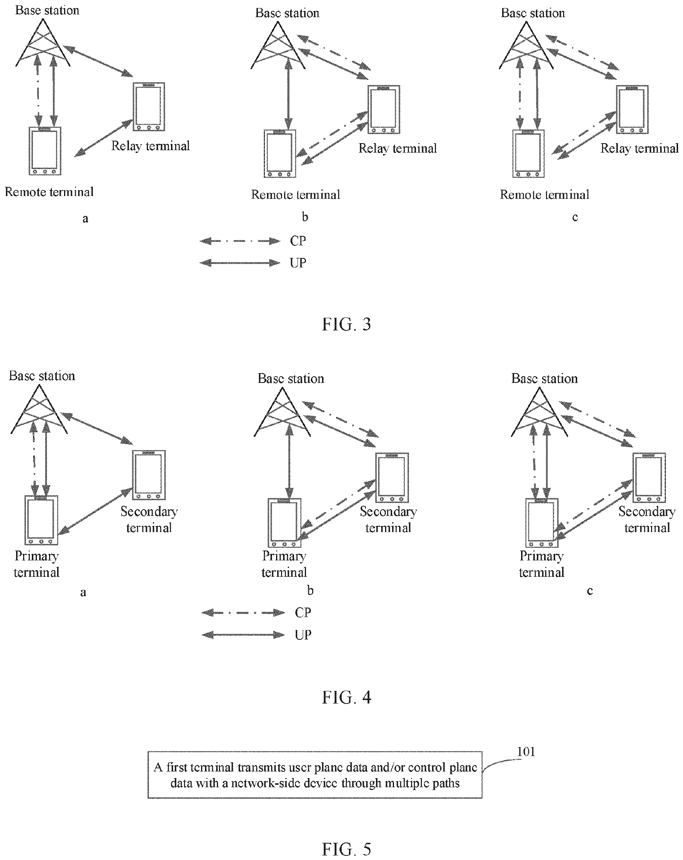

For a sidelink relay (SL relay architecture), multi-path means that the remote UE has established both an indirect path (indirect path) and a direct path (direct path), as shown in FIG. 3.

For a non-SL relay architecture, a connection between two UEs is not a sidelink (PC5) interface, assuming that an interface between the two UEs is a wired connection or an ideal inter-UE connection (ideal inter-UE connection). Multi-path herein means that primary UE has established both an indirect path and a direct path, as shown in FIG. 4.

In this embodiment, the indirect path refers to a radio link in which the remote UE (or the primary UE) establishes an RRC connection with the base station via the relay UE (or secondary UE) and a Uu interface of the relay UE (or secondary UE).

The direct path refers to a radio link in which the remote UE (or primary UE) establishes an RRC connection with the base station through a Uu interface of the remote UE.

A data transmission method provided in the embodiments of this application is hereinafter described in detail by using some embodiments and application scenarios thereof with reference to the accompanying drawings.

As shown in FIG. 5, an embodiment of this application provides a data transmission method, including:
Step 101: A first terminal transmits user plane data and/or control plane data with a network-side device through multiple paths, where
the multiple paths include at least a first path and a second path, where the first path is a direct path in which the first terminal directly communicates with the network-side device, and the second path is an indirect path in which the first terminal communicates with the network-side device through a second terminal; or
the first path is an indirect path in which the first terminal communicates with the network-side device through a second terminal, and the second path is a direct path in which the first terminal directly communicates with the network-side device.

In this embodiment of this application, a multi-path establishment procedure may be performed between the first terminal and the network-side device, and different signaling and service data may be transmitted between the first terminal and the network-side device through the multiple paths. Therefore, throughput of communication transmission can be improved, and when link quality of one path is poor, reliability of transmission can be ensured by using other paths with better link quality.

In this embodiment, the first terminal may be remote UE or primary UE (Primary UE), and the second terminal may be relay UE or secondary UE (Secondary UE).

In some embodiments, before the first terminal transmits the user plane data and/or the control plane data with the network-side device through the multiple paths, the method includes:
the first terminal communicates with the network-side device through the first path; and
in a case that a path addition condition is met, the first terminal sends a multi-path addition request message to the network-side device through the existing first path, requesting to add the second path.

The path addition condition may be specified in a protocol or configured by the network-side device or preconfigured by the network-side device.

The path addition process may also be understood as a terminal cooperation process. Therefore, it may also be equivalently described as follows: In a case that a terminal cooperation condition is met, the first terminal sends a terminal cooperation request message to the network-side device through the existing first path, requesting cooperation with the second terminal.

Based on the foregoing explanation, the multi-path addition request message is a path addition request, and the terminal cooperation request message is a UE aggregation request.

In a specific embodiment, the first terminal has established an RRC connection and a related user plane (User Plane, UP) path with the network-side device through a direct path, and the first terminal may use the existing direct path to establish an indirect path with the network-side device.

Specifically, when the remote UE or the primary UE is in a cell or a link condition is good, for example, when a serving cell's reference signal received power (Reference Signal Received Power, RSRP) of the first UE is not lower than a threshold, if the first UE requires data transmission, the first UE may directly establish an RRC connection with the serving cell, and establish a DRB path, that is, establish a direct CP+UP path. Therefore, the first UE can communicate with the network-side device through the direct path (that is, the first path) to transmit the control plane data and user plane data.

A path establishment method in this embodiment includes the following steps.

Step a1: The first terminal determines whether a preset path addition condition is met, where the path addition condition specifically includes at least one of the following:
a data buffer size (buffer size) of the first terminal is greater than or equal to a first threshold;
a service reliability (reliability) requirement of the first terminal is greater than or equal to a second threshold;
an upper layer of the first terminal indicates that a service of the first terminal is transmitted through the second path or through the first path and the second path, where upper layers (upper layers) are a general term for upper layer entities above an RRC layer in the first terminal, and may specifically include a NAS layer (Non-Access Stratum layer), a ProSe layer (Proximity Service layer), and an application layer;
a first paging indication is received from the network-side device;
a second indication is received from the network-side device, where the second indication is used to indicate that the network-side device supports a multi-path function; and
link quality of at least one candidate terminal meets a preset communication condition, where
the at least one candidate terminal includes the second terminal.

That link quality of at least one candidate terminal meets a preset communication condition includes at least one of the following:
signal quality between the candidate terminal and the first terminal (PC5 interface) meets the preset communication condition; and
signal quality of a serving cell of the candidate terminal meets the preset communication condition.

In a scenario in which downlink data arrives, it is potentially necessary to enhance a paging message (paging message), that is, send a first paging indication to the first terminal, to indicate a path establishment mode of the UE in the first paging indication. The first paging indication carries at least one of the following information:
instructing the first terminal to establish the first path and/or the second path, that is, instructing the first terminal to establish a single path or multiple paths, where the single path is the first path or the second path;
in a case that the first terminal is instructed to establish the single path, indicating that the path to be established is a direct path or an indirect path; and
in a case that the first terminal is instructed to establish the multiple paths, instructing to trigger an indirect path addition procedure by using existing direct data or trigger a direct path addition procedure by using existing indirect data or establish both a direct path and an indirect path.

If the first paging indication is 1-bit encoded, it may distinguish a single path (either direct or indirect path), and multiple paths (both direct and indirect paths); or if the first paging indication is 2-bit encoded, it may distinguish a single path (direct path only), a single path (indirect path only), and multiple paths (both direct and indirect paths).

That downlink data arrives may be: a base station pages a terminal, a bearer is established between the base station and the terminal by using an RRC message, and data is sent on the established bearer.

Step a2: In a case that the first terminal determines that the preset path addition condition is met, the first terminal sends a multi-path addition request message (aggregation request) to the network-side device through the existing first path, requesting to add the second path.

An existing message may be used to carry the multi-path addition request message, or a new multi-path addition request message may be defined. The existing message includes at least one of the following: terminal assistance information (UE Assistance Information, UAI), sidelink terminal information (Sidelink UE Information, SUI), a measurement report (Measurement report), a radio resource control setup complete (RRC Setup Complete) message, a radio resource control resume complete (RRC Resume Complete) message, and a radio resource control reestablishment complete (RRC Reestablishment Complete) message.

Further, the multi-path addition request message may further include first information, and the first information includes at least one of the following:
signal quality between the first terminal and the candidate terminal;
identification information of the candidate terminal;
identification information of a serving cell of the candidate terminal; and
signal quality of the serving cell of the candidate terminal.

Sending the first information to the network-side device may help the network-side device select the second terminal from the candidate terminals, to establish a link between the first terminal and the second terminal and ensure that the link has better communication quality.

Step a3: The first terminal receives a multi-path addition configuration message (aggregation response) sent by the network-side device.

An existing message may be used to carry the multi-path addition configuration message, or a new multi-path addition configuration message may be defined. The existing message includes an RRC reconfiguration with synchronization (reconfiguration with sync) message.

The multi-path addition configuration message includes at least one of the following:
identification information of the second terminal;
identification information of a serving cell of the second terminal;
first indication information for instructing to perform a path switching operation or a path addition operation, where the first indication information may be 1 bit, or a new information element is defined to carry the first indication information; and when the first indication information is 1 bit, the first indication information being 0 may instruct to perform the path switching operation, and the first indication information being 1 may instruct to add a path; or the first indication information being 1 may instruct to perform the path switching operation, and the first indication information being 0 may instruct to add a path;
a rule for transmitting the control plane data through the first path and the second path; and
a rule for transmitting the user plane data through the first path and the second path.

After two paths (indirect path and direct path) are established, the rules/rule for transmitting the user plane data and/or the control plane data may be configured by the network-side device, or the rules/rule for transmitting the user plane data and/or the control plane data through the first path and the second path are/is specified in a protocol.

In a case that the rules/rule for transmitting the user plane data and/or the control plane data through the first path and the second path are/is configured by the network-side device, the method further includes:
the first terminal receives path configuration information from the network-side device, where the path configuration information includes the rules/rule for transmitting the user plane data and/or the control plane data through the first path and the second path. The network-side device may send the path configuration information by using an RRC message or a broadcast message.

In this embodiment, the rules/rule for transmitting the user plane data and/or the control plane data may indicate which path each message or each bearer type takes, so that a complete RRC connection setup, resume, and/or reestablishment procedure is completed.

In some embodiments, the rule may include any one of the following:
a rule for transmitting signaling through the first path and the second path, where different signaling may be transmitted through different paths, for example, any signaling of an SRB 0 is transmitted through the indirect path, and any signaling of an SRB 1 and an SRB 2 is transmitted through the direct path;
a rule for transmitting uplink data and/or downlink data through the first path and the second path, where data in different transmission directions is transmitted through different paths (indirect path or direct path); for example, any signaling in an uplink (UpLink, UL) direction is transmitted through the indirect path, and any signaling in a downlink (DownLink, DL) direction is transmitted through the direct path, so that power consumption can be reduced;
a rule for simultaneously transmitting different parts of the signaling radio bearer SRB 1 in the first path and the second path, where for example, a first part of the SRB 1 is transmitted in the first path and a second part of the SRB 1 is transmitted in the second path, so that reliability of data transmission can be improved through multi-path transmission and that a data rate and throughput of data transmission can be improved;
a rule for simultaneously transmitting a duplicated SRB 1 in the first path and the second path, so that reliability of data transmission can be improved through multi-path transmission;
a rule for simultaneously transmitting different parts of a data radio bearer DRB in the first path and the second path, where for example, a first part of the DRB is transmitted in the first path and a second part of the DRB is transmitted in the second path, so that reliability of data transmission can be improved through multi-path transmission, and that the data rate and throughput of data transmission can be improved; and
a rule for simultaneously transmitting a duplicated DRB in the first path and the second path, so that reliability of data transmission can be improved through multi-path transmission.

In some embodiments, the rule further includes:
in a scenario (intra-gNB scenario) in which the first terminal and the second terminal are served by a same base station, disallowing transmission over an SRB 3 and a split SRB 3, that is, from a perspective of the terminal side, the UE does not receive the SRB 3 and the split SRB 3 configured by the base station; and from a perspective of the network side, the base station does not support configurations of the SRB 3 and the split SRB 3 to the UE.

In a specific example, transmission paths of all messages may be specified in a protocol, for example, sending an RRC Setup Request message and an RRC Setup Complete message (with low transmit power and a short path) in the indirect path and receiving an RRC Setup message in the direct path.

In another specific example, the network-side device and a protocol specification may jointly indicate transmission paths of all messages. For example, a transmission path of the SRB 0 is specified in a protocol as follows: sending an RRC Setup Request message and receiving an RRC Setup message in the indirect path, and then determining, based on an indication carried in the RRC Setup message, whether the SRB 1 takes the direct path or the indirect path. Transmission rules of the SRB 2 and/or the DRB may follow the transmission rule of the SRB 1 by default, or transmission rules of the SRB 2 and/or the DRB may be further flexibly indicated by an RRC Reconfiguration message.

Step a4: The first terminal sends a multi-path configuration complete message (aggregation complete) to the network-side device.

An existing message may be used to carry the multi-path configuration complete message, or a new multi-path configuration complete message may be defined. The existing message includes an RRC reconfiguration complete (reconfiguration complete) message.

In some embodiments, in a case that establishment of the second path is unsuccessful, the first terminal sends a multi-path addition failure message to the network-side device.

In another specific embodiment, the first terminal has established an RRC connection and a related user plane (UP) path with the network-side device through an indirect path, and the first terminal may use the existing indirect path (that is, the first path) to communicate with the network-side device to establish a direct path.

Specifically, when the remote UE or the primary UE is at an edge of a cell or a link condition is not good, for example, when a serving cell's reference signal received power (RSRP) of the first UE is lower than a threshold, if the first UE requires data transmission, the first UE may find suitable relay UE or secondary UE (link quality from the second UE to the network side is better ensured, for example, the serving cell's RSRP of the second UE is higher than a threshold, or optionally, a highest RSRP threshold may be configured, and the serving cell's RSRP of the second UE cannot exceed the highest RSRP threshold, to avoid excessive interference caused when the second UE close to the base station forwards data), and an RRC connection is established to the serving cell via the relay UE or the secondary UE, and a DRB path is established, that is, an indirect CP+UP path is established, so that the control plane data and the user plane data can be transmitted through the indirect path.

A path establishment method in this embodiment includes the following steps.

Step b1: The first terminal determines whether a preset path addition condition is met, where the path addition condition specifically includes at least one of the following:
a data buffer size (buffer size) of the first terminal is greater than or equal to a first threshold;
a service reliability (reliability) requirement of the first terminal is greater than or equal to a second threshold;
an upper layer of the first terminal indicates that a service of the first terminal is transmitted through the second path or through the first path and the second path, where upper layers (upper layers) are a general term for upper layer entities above an RRC layer in the first terminal, and may specifically include a NAS layer (Non-Access Stratum layer), a ProSe layer (Proximity Service layer), and an application layer;
a first paging indication is received from the network-side device;
a second indication is received from the network-side device, where the second indication is used to indicate that the network-side device supports a multi-path function; and
at least one candidate cell meets a preset communication condition, where
the at least one candidate cell includes a cell in the direct path, of the first terminal.

In a scenario in which downlink data arrives, it is potentially necessary to enhance a paging message (paging message), that is, send a first paging indication to the first terminal, to indicate a path establishment mode of the UE in the first paging indication. The first paging indication carries at least one of the following information:
instructing the first terminal to establish the first path and/or the second path, that is, instructing the first terminal to establish a single path or multiple paths, where the single path is the first path or the second path;
in a case that the first terminal is instructed to establish the single path, indicating that the path to be established is a direct path or an indirect path; and
in a case that the first terminal is instructed to establish the multiple paths, instructing to trigger an indirect path addition procedure by using existing direct data or trigger a direct path addition procedure by using existing indirect data or establish both a direct path and an indirect path.

If the first paging indication is 1-bit encoded, it may distinguish a single path (either direct or indirect path), and multiple paths (both direct and indirect paths); or if the first paging indication is 2-bit encoded, it may distinguish a single path (direct path only), a single path (indirect path only), and multiple paths (both direct and indirect paths).

That downlink data arrives may be: a base station pages a terminal, a bearer is established between the base station and the terminal by using an RRC message, and data is sent on the established bearer.

Step b2: In a case that the first terminal determines that the preset path addition condition is met, the first terminal sends a multi-path addition request message (aggregation request) to the network-side device through the existing first path, requesting to add the second path.

An existing message may be used to carry the multi-path addition request message, or a new multi-path addition request message may be defined. The existing message includes at least one of the following: terminal assistance information (UE Assistance Information, UAI), sidelink terminal information (Sidelink UE Information, SUI), a measurement report (Measurement report), a radio resource control setup complete (RRC Setup Complete) message, a radio resource control resume complete (RRC Resume Complete) message, and a radio resource control reestablishment complete (RRC Reestablishment Complete) message.

Further, the multi-path addition request message may further include first information, and the first information includes at least one of the following:
cell identification information of the candidate cell; and
signal quality of the candidate cell of the first terminal.

Sending the first information to the network-side device may help the network-side device select a cell from the candidate cells, to establish a direct path between the first terminal and the cell and ensure that the direct path has better communication quality.

Step b3: The first terminal receives a multi-path addition configuration message (aggregation response) sent by the network-side device.

An existing message may be used to carry the multi-path addition configuration message, or a new multi-path addition configuration message may be defined. The existing message includes an RRC reconfiguration with synchronization (reconfiguration with sync) message.

The multi-path addition configuration message includes at least one of the following:
cell identification information of the direct path;
first indication information for instructing to perform a path switching operation or a path addition operation, where the first indication information may be 1 bit, or a new information element is defined to carry the first indication information; and when the first indication information is 1 bit, the first indication information being 0 may instruct to perform the path switching operation, and the first indication information being 1 may instruct to add a path; or the first indication information being 1 may instruct to perform the path switching operation, and the first indication information being 0 may instruct to add a path;
a rule for transmitting the control plane data through the first path and the second path; and
a rule for transmitting the user plane data through the first path and the second path.

After two paths (indirect path and direct path) are established, the rules/rule for transmitting the user plane data and/or the control plane data may be configured by the network-side device, or the rules/rule for transmitting the user plane data and/or the control plane data through the first path and the second path are/is specified in a protocol.

In a case that the rules/rule for transmitting the user plane data and/or the control plane data through the first path and the second path are/is configured by the network-side device, the method further includes:
the first terminal receives path configuration information from the network-side device, where the path configuration information includes the rules/rule for transmitting the user plane data and/or the control plane data through the first path and the second path. The network-side device may send the path configuration information by using an RRC message or a broadcast message.

In this embodiment, the rules/rule for transmitting the user plane data and/or the control plane data may indicate which path each message or each bearer type takes, so that a complete RRC connection setup, resume, and/or reestablishment procedure is completed.

In some embodiments, the rule may include any one of the following:
a rule for transmitting signaling through the first path and the second path, where different signaling may be transmitted through different paths, for example, any signaling of an SRB 0 is transmitted through the indirect path, and any signaling of an SRB 1 and an SRB 2 is transmitted through the direct path;
a rule for transmitting uplink data and/or downlink data through the first path and the second path, where data in different transmission directions is transmitted through different paths (indirect path or direct path); for example, any signaling in an uplink UL direction is transmitted through the indirect path, and any signaling in a downlink DL direction is transmitted through the direct path, so that power consumption can be reduced;
a rule for simultaneously transmitting different parts of the signaling radio bearer SRB 1 in the first path and the second path, where for example, a first part of the SRB 1 is transmitted in the first path and a second part of the SRB 1 is transmitted in the second path, so that reliability of data transmission can be improved through multi-path transmission, and that a data rate and throughput of data transmission can be improved;
a rule for simultaneously transmitting a duplicated SRB 1 in the first path and the second path, so that reliability of data transmission can be improved through multi-path transmission, and that the data rate and throughput of data transmission can be improved;
a rule for simultaneously transmitting different parts of a data radio bearer DRB in the first path and the second path, where for example, a first part of the DRB is transmitted in the first path and a second part of the DRB is transmitted in the second path, so that reliability of data transmission can be improved through multi-path transmission, and that the data rate and throughput of data transmission can be improved; and
a rule for simultaneously transmitting a duplicated DRB in the first path and the second path, so that reliability of data transmission can be improved through multi-path transmission, and that the data rate and throughput of data transmission can be improved.

In some embodiments, the rule further includes:
in a scenario (intra-gNB scenario) in which the first terminal and the second terminal are served by a same base station, disallowing transmission over an SRB 3 and a split SRB 3, that is, from a perspective of the terminal side, the UE does not receive the SRB 3 and the split SRB 3 configured by the base station; and from a perspective of the network side, the base station does not support configurations of the SRB 3 and the split SRB 3.

In a specific example, transmission paths of all messages may be specified in a protocol, for example, sending an RRC Setup Request message and an RRC Setup Complete message (with low transmit power and a short path) in the indirect path and receiving an RRC Setup message in the direct path.

In another specific example, the network-side device and a protocol specification may jointly indicate transmission paths of all messages. For example, a transmission path of the SRB 0 is specified in a protocol as follows: sending an RRC Setup Request message and receiving an RRC Setup message in the indirect path, and then determining, based on an indication carried in the RRC Setup message, whether the SRB 1 takes the direct path or the indirect path. Transmission rules of the SRB 2 and/or the DRB may follow the transmission rule of the SRB 1 by default, or transmission rules of the SRB 2 and/or the DRB may be further flexibly indicated by an RRC Reconfiguration message.

Step b4: The first terminal sends a multi-path configuration complete message (aggregation complete) to the network-side device.

An existing message may be used to carry the multi-path configuration complete message, or a new multi-path configuration complete message may be defined. The existing message includes an RRC reconfiguration complete (reconfiguration complete) message.

In some embodiments, in a case that establishment of the second path is unsuccessful, the first terminal sends a multi-path addition failure message to the network-side device.

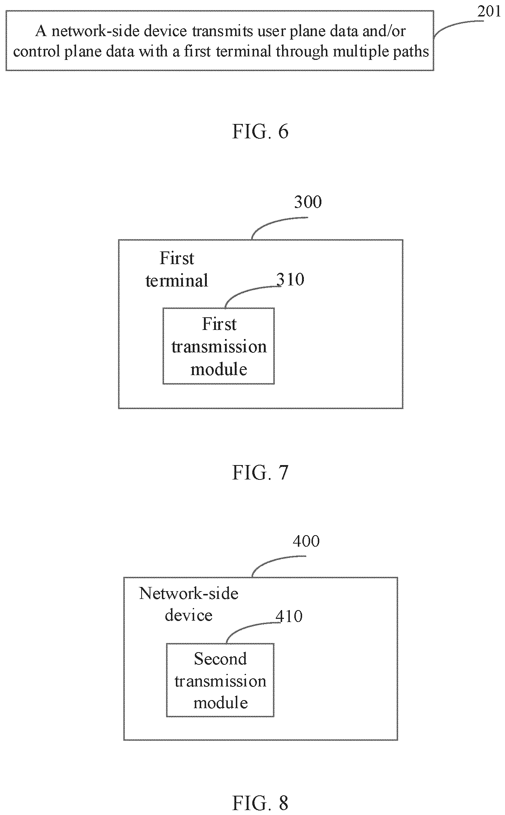

As shown in FIG. 6, an embodiment of this application further provides a data transmission method, including:
Step 201: A network-side device transmits user plane data and/or control plane data with a first terminal through multiple paths, where
the multiple paths include at least a first path and a second path, where the first path is a direct path in which the first terminal directly communicates with the network-side device, and the second path is an indirect path in which the first terminal communicates with the network-side device through a second terminal; or
the first path is an indirect path in which the first terminal communicates with the network-side device through a second terminal, and the second path is a direct path in which the first terminal directly communicates with the network-side device.

In this embodiment of this application, a multi-path establishment procedure may be performed between the first terminal and the network-side device, and different signaling and service data may be transmitted between the first terminal and the network-side device through the multiple paths. Therefore, throughput of communication transmission can be improved, and when link quality of one path is poor, reliability of transmission can be ensured by using other paths with better link quality.

In some embodiments, before the network-side device transmits the user plane data and/or the control plane data with the first terminal through the multiple paths, the method includes:
the network-side device communicates with the first terminal through the first path; and
the network-side device receives a multi-path addition request message sent by the first terminal through the existing first path and requests to add the second path, where the multi-path addition request message is sent after the first terminal determines that a path addition condition is met.

The path addition condition may be specified in a protocol or configured by the network-side device or preconfigured by the network-side device.

In some embodiments, before the network-side device transmits the user plane data and/or the control plane data with the first terminal through the multiple paths, the method further includes:
the network-side device sends a second indication by using a system broadcast message and/or a radio resource control RRC dedicated message, where the second indication is used to indicate that the network-side device supports a multi-path function.

The system broadcast message may be a SIB1, a SIB12, or a new SIB, and the RRC dedicated message may be RRC connection setup (RRC setup), RRC connection resume (RRC resume), RRC reconfiguration (RRC reconfiguration), or a new RRC dedicated message.

In a specific embodiment, the first terminal has established an RRC connection and a related user plane (UP) path with the network-side device through a direct path, and the first terminal may use the existing direct path to establish an indirect path with the network-side device.

Specifically, when remote UE or primary UE is in a cell or a link condition is good, for example, when a serving cell's reference signal received power (RSRP) of the first UE is not lower than a threshold, if the first UE requires data transmission, the first UE may directly establish an RRC connection with the serving cell, and establish a DRB path, that is, establish a direct CP+UP path. Therefore, the first UE can communicate with the network-side device through the direct path (that is, the first path) to transmit the control plane data and the user plane data.

A path establishment method in this embodiment includes the following steps.

Step a1: The first terminal determines whether a preset path addition condition is met, where the path addition condition specifically includes at least one of the following:
a data buffer size (buffer size) of the first terminal is greater than or equal to a first threshold;
a service reliability (reliability) requirement of the first terminal is greater than or equal to a second threshold;
an upper layer of the first terminal indicates that a service of the first terminal is transmitted through the second path or through the first path and the second path, where upper layers (upper layers) are a general term for upper layer entities above an RRC layer in the first terminal, and may specifically include a NAS layer (Non-Access Stratum layer), a ProSe layer (Proximity Service layer), and an application layer;
a first paging indication is received from the network-side device;
a second indication is received from the network-side device, where the second indication is used to indicate that the network-side device supports a multi-path function; and
link quality of at least one candidate terminal meets a preset communication condition, where
the at least one candidate terminal includes the second terminal.

That link quality of at least one candidate terminal meets a preset communication condition includes at least one of the following:
signal quality between the candidate terminal and the first terminal (PC5 interface) meets the preset communication condition; and
signal quality of a serving cell of the candidate terminal meets the preset communication condition.

In a scenario in which downlink data arrives, it is potentially necessary to enhance a paging message (paging message), that is, send a first paging indication to the first terminal, to indicate a path establishment mode of the UE in the first paging indication. The first paging indication carries at least one of the following information:
instructing the first terminal to establish the first path and/or the second path, that is, instructing the first terminal to establish a single path or multiple paths, where the single path is the first path or the second path;
in a case that the first terminal is instructed to establish the single path, indicating that the path to be established is a direct path or an indirect path; and
in a case that the first terminal is instructed to establish the multiple paths, instructing to trigger an indirect path addition procedure by using existing direct data or trigger a direct path addition procedure by using existing indirect data or establish both a direct path and an indirect path.

If the first paging indication is 1-bit encoded, it may distinguish a single path (either direct or indirect path), and multiple paths (both direct and indirect paths); or if the first paging indication is 2-bit encoded, it may distinguish a single path (direct path only), a single path (indirect path only), and multiple paths (both direct and indirect paths).

That downlink data arrives may be: a base station pages a terminal, a bearer is established between the base station and the terminal by using an RRC message, and data is sent on the established bearer.

Step a2: In a case that the first terminal determines that the preset path addition condition is met, the first terminal sends a multi-path addition request message (aggregation request) to the network-side device through the existing first path, requesting to add the second path.

An existing message may be used to carry the multi-path addition request message, or a new multi-path addition request message may be defined. The existing message includes at least one of the following: terminal assistance information (UE Assistance Information, UAI), sidelink terminal information (Sidelink UE Information, SUI), a measurement report (Measurement report), a radio resource control setup complete (RRC Setup Complete) message, a radio resource control resume complete (RRC Resume Complete) message, and a radio resource control reestablishment complete (RRC Reestablishment Complete) message.

Further, the multi-path addition request message may further include first information, and the first information includes at least one of the following:
signal quality between the first terminal and the candidate terminal;
identification information of the candidate terminal;
identification information of a serving cell of the candidate terminal; and
signal quality of the serving cell of the candidate terminal.

Sending the first information to the network-side device may help the network-side device select the second terminal from the candidate terminals, to establish a link between the first terminal and the second terminal and ensure that the link has better communication quality.

Step a3: The first terminal receives a multi-path addition configuration message (aggregation response) sent by the network-side device.

An existing message may be used to carry the multi-path addition configuration message, or a new multi-path addition configuration message may be defined. The existing message includes an RRC reconfiguration with synchronization (reconfiguration with sync) message.

The multi-path addition configuration message includes at least one of the following:
identification information of the second terminal;
identification information of a serving cell of the second terminal;
first indication information for instructing to perform a path switching operation or a path addition operation, where the first indication information may be 1 bit, or a new information element is defined to carry the first indication information; and when the first indication information is 1 bit, the first indication information being 0 may instruct to perform the path switching operation, and the first indication information being 1 may instruct to add a path; or the first indication information being 1 may instruct to perform the path switching operation, and the first indication information being 0 may instruct to add a path;
a rule for transmitting the control plane data through the first path and the second path; and
a rule for transmitting the user plane data through the first path and the second path.

After two paths (indirect path and direct path) are established, the rules/rule for transmitting the user plane data and/or the control plane data may be configured by the network-side device, or the rules/rule for transmitting the user plane data and/or the control plane data through the first path and the second path are/is specified in a protocol.

In a case that the rules/rule for transmitting the user plane data and/or the control plane data through the first path and the second path are/is configured by the network-side device, the method further includes:
the first terminal receives path configuration information from the network-side device, where the path configuration information includes the rules/rule for transmitting the user plane data and/or the control plane data through the first path and the second path. The network-side device may send the path configuration information by using an RRC message or a broadcast message.

In this embodiment, the rules/rule for transmitting the user plane data and/or the control plane data may indicate which path each message or each bearer type takes, so that a complete RRC connection setup, resume, and/or reestablishment procedure is completed.

In some embodiments, the rule may include any one of the following:
a rule for transmitting signaling through the first path and the second path, where different signaling may be transmitted through different paths, for example, any signaling of an SRB 0 is transmitted through the indirect path, and any signaling of an SRB 1 and an SRB 2 is transmitted through the direct path;
a rule for transmitting uplink data and/or downlink data through the first path and the second path, where data in different transmission directions is transmitted through different paths (indirect path or direct path); for example, any signaling in an uplink UL direction is transmitted through the indirect path, and any signaling in a downlink DL direction is transmitted through the direct path, so that power consumption can be reduced;
a rule for simultaneously transmitting different parts of the signaling radio bearer SRB 1 in the first path and the second path, where for example, a first part of the SRB 1 is transmitted in the first path and a second part of the SRB 1 is transmitted in the second path, so that reliability of data transmission can be improved through multi-path transmission, and that a data rate and throughput of data transmission can be improved;
a rule for simultaneously transmitting a duplicated SRB 1 in the first path and the second path, so that reliability of data transmission can be improved through multi-path transmission, and that the data rate and throughput of data transmission can be improved;
a rule for simultaneously transmitting different parts of a data radio bearer DRB in the first path and the second path, where for example, a first part of the DRB is transmitted in the first path and a second part of the DRB is transmitted in the second path, so that reliability of data transmission can be improved through multi-path transmission, and that the data rate and throughput of data transmission can be improved; and
a rule for simultaneously transmitting a duplicated DRB in the first path and the second path, so that reliability of data transmission can be improved through multi-path transmission, and that the data rate and throughput of data transmission can be improved.

In some embodiments, the rule further includes:
in a scenario (intra-gNB scenario) in which the first terminal and the second terminal are served by a same base station, disallowing transmission over an SRB 3 and a split SRB 3, that is, from a perspective of the terminal side, the UE does not receive the SRB 3 and the split SRB 3 configured by the base station; and from a perspective of the network side, the base station does not support configurations of the SRB 3 and the split SRB 3.

In a specific example, transmission paths of all messages may be specified in a protocol, for example, sending an RRC Setup Request message and an RRC Setup Complete message (with low transmit power and a short path) in the indirect path and receiving an RRC Setup message in the direct path.

In another specific example, the network-side device and a protocol specification may jointly indicate transmission paths of all messages. For example, a transmission path of the SRB 0 is specified in a protocol as follows: sending an RRC Setup Request message and receiving an RRC Setup message in the indirect path, and then determining, based on an indication carried in the RRC Setup message, whether the SRB 1 takes the direct path or the indirect path. Transmission rules of the SRB 2 and/or the DRB may follow the transmission rule of the SRB 1 by default, or transmission rules of the SRB 2 and/or the DRB may be further flexibly indicated by an RRC Reconfiguration message.

Step a4: The first terminal sends a multi-path configuration complete message (aggregation complete) to the network-side device.

An existing message may be used to carry the multi-path configuration complete message, or a new multi-path configuration complete message may be defined. The existing message includes an RRC reconfiguration complete (reconfiguration complete) message.

In another specific embodiment, the first terminal has established an RRC connection and a related user plane (UP) path with the network-side device through an indirect path, and the first terminal may use the existing indirect path (that is, the first path) to communicate with the network-side device to establish a direct path.

Specifically, when remote UE or primary UE is at an edge of a cell or a link condition is not good, for example, when a serving cell's reference signal received power (RSRP) of the first UE is lower than a threshold, if the first UE requires data transmission, the first UE may find suitable relay UE or secondary UE (link quality from the second UE to the network side is better ensured, for example, RSRP of the second UE is higher than a threshold, or optionally, a highest RSRP threshold may be configured, and RSRP of the second UE cannot exceed the highest RSRP threshold, to avoid excessive interference caused when the second UE close to the base station forwards data), and an RRC connection is established to the serving cell through the relay UE or the secondary UE, and a DRB path is established, that is, an indirect CP+UP path is established, so that the control plane data and the user plane data can be transmitted through the indirect path.

In some embodiments, in a case that establishment of the second path is unsuccessful, the first terminal sends a multi-path addition failure message to the network-side device.

A path establishment method in this embodiment includes the following steps.

Step b 1: The first terminal determines whether a preset path addition condition is met, where the path addition condition specifically includes at least one of the following:
a data buffer size (buffer size) of the first terminal is greater than or equal to a first threshold;
a service reliability (reliability) requirement of the first terminal is greater than or equal to a second threshold;
an upper layer of the first terminal indicates that a service of the first terminal is transmitted through the second path or through the first path and the second path, where upper layers (upper layers) are a general term for upper layer entities above an RRC layer in the first terminal, and may specifically include a NAS layer (Non-Access Stratum layer), a ProSe layer (Proximity Service layer), and an application layer;
a first paging indication is received from the network-side device;
a second indication is received from the network-side device, where the second indication is used to indicate that the network-side device supports a multi-path function; and
at least one candidate cell meets a preset communication condition, where
the at least one candidate cell includes a cell in the direct path, of the first terminal.

In a scenario in which downlink data arrives, it is potentially necessary to enhance a paging message (paging message), that is, send a first paging indication to the first terminal, to indicate a path establishment mode of the UE in the first paging indication. The first paging indication carries at least one of the following information:
instructing the first terminal to establish the first path and/or the second path, that is, instructing the first terminal to establish a single path or multiple paths, where the single path is the first path or the second path;
in a case that the first terminal is instructed to establish the single path, indicating that the path to be established is a direct path or an indirect path; and
in a case that the first terminal is instructed to establish the multiple paths, instructing to trigger an indirect path addition procedure by using existing direct data or trigger a direct path addition procedure by using existing indirect data or establish both a direct path and an indirect path.

If the first paging indication is 1-bit encoded, it may distinguish a single path (either direct or indirect path), and multiple paths (both direct and indirect paths); or if the first paging indication is 2-bit encoded, it may distinguish a single path (direct path only), a single path (indirect path only), and multiple paths (both direct and indirect paths).

That downlink data arrives may be: a base station pages a terminal, a bearer is established between the base station and the terminal by using an RRC message, and data is sent on the established bearer.

Step b2: In a case that the first terminal determines that the preset path addition condition is met, the first terminal sends a multi-path addition request message (aggregation request) to the network-side device through the existing first path, requesting to add the second path.

An existing message may be used to carry the multi-path addition request message, or a new multi-path addition request message may be defined. The existing message includes at least one of the following: terminal assistance information (UE Assistance Information, UAI), sidelink terminal information (Sidelink UE Information, SUI), a measurement report (Measurement report), a radio resource control setup complete (RRC Setup Complete) message, a radio resource control resume complete (RRC Resume Complete) message, and a radio resource control reestablishment complete (RRC Reestablishment Complete) message.

Further, the multi-path addition request message may further include first information, and the first information includes at least one of the following:
cell identification information of the candidate cell; and
signal quality of the candidate cell of the first terminal.

Sending the first information to the network-side device may help the network-side device select a cell from the candidate cells, to establish a direct path between the first terminal and the cell and ensure that the direct path has better communication quality.

Step b3: The first terminal receives a multi-path addition configuration message (aggregation response) sent by the network-side device.

An existing message may be used to carry the multi-path addition configuration message, or a new multi-path addition configuration message may be defined. The existing message includes an RRC reconfiguration with synchronization (reconfiguration with sync) message.

The multi-path addition configuration message includes at least one of the following:
cell identification information of the direct path;
first indication information for instructing to perform a path switching operation or a path addition operation, where the first indication information may be 1 bit, or a new information element is defined to carry the first indication information; and when the first indication information is 1 bit, the first indication information being 0 may instruct to perform the path switching operation, and the first indication information being 1 may instruct to add a path; or the first indication information being 1 may instruct to perform the path switching operation, and the first indication information being 0 may instruct to add a path;
a rule for transmitting the control plane data through the first path and the second path; and
a rule for transmitting the user plane data through the first path and the second path.

After two paths (indirect path and direct path) are established, the rules/rule for transmitting the user plane data and/or the control plane data may be configured by the network-side device, or the rules/rule for transmitting the user plane data and/or the control plane data through the first path and the second path are/is specified in a protocol.

In a case that the rules/rule for transmitting the user plane data and/or the control plane data through the first path and the second path are/is configured by the network-side device, the method further includes:
the first terminal receives path configuration information from the network-side device, where the path configuration information includes the rules/rule for transmitting the user plane data and/or the control plane data through the first path and the second path. The network-side device may send the path configuration information by using an RRC message or a broadcast message.

In this embodiment, the rules/rule for transmitting the user plane data and/or the control plane data may indicate which path each message or each bearer type takes, so that a complete RRC connection setup, resume, and/or reestablishment procedure is completed.

In some embodiments, the rule may include any one of the following:
a rule for transmitting signaling through the first path and the second path, where different signaling may be transmitted through different paths, for example, any signaling of an SRB 0 is transmitted through the indirect path, and any signaling of an SRB 1 and an SRB 2 is transmitted through the direct path;
a rule for transmitting uplink data and/or downlink data through the first path and the second path, where data in different transmission directions is transmitted through different paths (indirect path or direct path); for example, any signaling in an uplink UL direction is transmitted through the indirect path, and any signaling in a downlink DL direction is transmitted through the direct path, so that power consumption can be reduced;
a rule for simultaneously transmitting different parts of the signaling radio bearer SRB 1 in the first path and the second path, where for example, a first part of the SRB 1 is transmitted in the first path and a second part of the SRB 1 is transmitted in the second path, so that reliability of data transmission can be improved through multi-path transmission, and that a data rate and throughput of data transmission can be improved;
a rule for simultaneously transmitting a duplicated SRB 1 in the first path and the second path, so that reliability of data transmission can be improved through multi-path transmission, and that the data rate and throughput of data transmission can be improved;
a rule for simultaneously transmitting different parts of a data radio bearer DRB in the first path and the second path, where for example, a first part of the DRB is transmitted in the first path and a second part of the DRB is transmitted in the second path, so that reliability of data transmission can be improved through multi-path transmission, and that the data rate and throughput of data transmission can be improved; and
a rule for simultaneously transmitting a duplicated DRB in the first path and the second path, so that reliability of data transmission can be improved through multi-path transmission, and that the data rate and throughput of data transmission can be improved.

In some embodiments, the rule further includes:
in a scenario (intra-gNB scenario) in which the first terminal and the second terminal are served by a same base station, disallowing transmission over an SRB 3 and a split SRB 3, that is, from a perspective of the terminal side, the UE does not receive the SRB 3 and the split SRB 3 configured by the base station; and from a perspective of the network side, the base station does not support configurations of the SRB 3 and the split SRB 3.

In a specific example, transmission paths of all messages may be specified in a protocol, for example, sending an RRC Setup Request message and an RRC Setup Complete message (with low transmit power and a short path) in the indirect path and receiving an RRC Setup message in the direct path.

In another specific example, the network-side device and a protocol specification may jointly indicate transmission paths of all messages. For example, a transmission path of the SRB 0 is specified in a protocol as follows: sending an RRC Setup Request message and receiving an RRC Setup message in the indirect path, and then determining, based on an indication carried in the RRC Setup message, whether the SRB 1 takes the direct path or the indirect path. Transmission rules of the SRB 2 and/or the DRB may follow the transmission rule of the SRB 1 by default, or transmission rules of the SRB 2 and/or the DRB may be further flexibly indicated by an RRC Reconfiguration message.

Step b4: The first terminal sends a multi-path configuration complete message (aggregation complete) to the network-side device.

An existing message may be used to carry the multi-path configuration complete message, or a new multi-path configuration complete message may be defined. The existing message includes an RRC reconfiguration complete (reconfiguration complete) message.

In some embodiments, in a case that establishment of the second path is unsuccessful, the first terminal sends a multi-path addition failure message to the network-side device.

The data transmission method provided in this embodiment of this application may be performed by a data transmission apparatus. A data transmission apparatus provided in an embodiment of this application is described by assuming that the data transmission apparatus performs the data transmission method in this embodiment of this application.

As shown in FIG. 7, an embodiment of this application provides a data transmission apparatus. The apparatus is applied to a first terminal 300 and includes:
a first transmission module 310, configured to transmit user plane data and/or control plane data with a network-side device through multiple paths, where
the multiple paths include at least a first path and a second path, where the first path is a direct path in which the first terminal directly communicates with the network-side device, and the second path is an indirect path in which the first terminal communicates with the network-side device through a second terminal; or
the first path is an indirect path in which the first terminal communicates with the network-side device through a second terminal, and the second path is a direct path in which the first terminal directly communicates with the network-side device.

In this embodiment of this application, a multi-path establishment procedure may be performed between the first terminal and the network-side device, and different signaling and service data may be transmitted between the first terminal and the network-side device through the multiple paths. Therefore, throughput of communication transmission can be improved, and when link quality of one path is poor, reliability of transmission can be ensured by using other paths with better link quality.

In some embodiments, the first transmission module 310 is configured to: communicate with the network-side device through the first path; and
in a case that a path addition condition is met, send a multi-path addition request message to the network-side device through the existing first path, requesting to add the second path.

In some embodiments, in a case that the first path is the direct path in which the first terminal directly communicates with the network-side device, and that the second path is the indirect path in which the first terminal communicates with the network-side device through the second terminal, the path addition condition includes at least one of the following:
a data buffer size of the first terminal is greater than or equal to a first threshold;
a service reliability requirement of the first terminal is greater than or equal to a second threshold;
an upper layer of the first terminal indicates that a service of the first terminal is transmitted through the second path or through the first path and the second path;
a first paging indication is received from the network-side device;
a second indication is received from the network-side device, where the second indication is used to indicate that the network-side device supports a multi-path function; and
link quality of at least one candidate terminal meets a preset communication condition, where
the at least one candidate terminal includes the second terminal.

In some embodiments, that link quality of at least one candidate terminal meets a preset communication condition includes at least one of the following:
signal quality between the candidate terminal and the first terminal meets the preset communication condition; and
signal quality of a serving cell of the candidate terminal meets the preset communication condition.

In some embodiments, the multi-path addition request message further includes first information, and the first information includes at least one of the following:
signal quality between the first terminal and the candidate terminal;
identification information of the candidate terminal;
identification information of a serving cell of the candidate terminal; and
signal quality of the serving cell of the candidate terminal.

In some embodiments, the first transmission module 310 is configured to: receive a multi-path addition configuration message returned by the network-side device; and send a multi-path addition complete message to the network-side device;
or
receive, by the first terminal, a multi-path addition configuration message returned by the network-side device; and
send, by the first terminal, a multi-path addition failure message to the network-side device.

In some embodiments, in a case that the first path is the direct path in which the first terminal directly communicates with the network-side device, and that the second path is the indirect path in which the first terminal communicates with the network-side device through the second terminal, the multi-path addition configuration message includes at least one of the following:
identification information of the second terminal;
identification information of a serving cell of the second terminal;
first indication information for instructing to perform a path switching operation or a path addition operation;
a rule for transmitting the control plane data through the first path and the second path; and
a rule for transmitting the user plane data through the first path and the second path.

In some embodiments, in a case that the first path is an indirect path in which the first terminal communicates with the network-side device through a second terminal, and that the second path is a direct path in which the first terminal directly communicates with the network-side device, the path addition condition includes at least one of the following:
a data buffer size of the first terminal is greater than or equal to a first threshold;
a service reliability requirement of the first terminal is greater than or equal to a second threshold;
an upper layer of the first terminal indicates that a service of the first terminal is transmitted through the second path or through the first path and the second path;
a first paging indication is received from the network-side device;
a second indication is received from the network-side device, where the second indication is used to indicate that the network-side device supports a multi-path function; and
at least one candidate cell meets a preset communication condition, where
the at least one candidate cell includes a cell in the direct path, of the first terminal.

In some embodiments, the multi-path addition request message further includes first information, and the first information includes at least one of the following:
cell identification information of the candidate cell; and
signal quality of the candidate cell of the first terminal.

In some embodiments, in a case that the first path is an indirect path in which the first terminal communicates with the network-side device through a second terminal, and that the second path is a direct path in which the first terminal directly communicates with the network-side device, the multi-path addition configuration message includes at least one of the following:
cell identification information of the direct path;
first indication information for instructing to perform a path switching operation or a path addition operation;
a rule for transmitting the control plane data through the first path and the second path; and
a rule for transmitting the user plane data through the first path and the second path.

In some embodiments, the rules/rule for transmitting the user plane data and/or the control plane data through the first path and the second path are/is specified in a protocol.

In some embodiments, the first transmission module 310 is configured to receive path configuration information from the network-side device, where the path configuration information includes the rules/rule for transmitting the user plane data and/or the control plane data through the first path and the second path.

In some embodiments, the rule includes at least one of the following:
a rule for transmitting signaling through the first path and the second path;
a rule for transmitting uplink data and/or downlink data through the first path and the second path;
a rule for simultaneously transmitting different parts of a signaling radio bearer SRB 1 in the first path and the second path;
a rule for simultaneously transmitting a duplicated SRB 1 in the first path and the second path;
a rule for simultaneously transmitting different parts of a data radio bearer DRB in the first path and the second path; and
a rule for simultaneously transmitting a duplicated DRB in the first path and the second path.

In some embodiments, the rule further includes:
in a scenario (intra-gNB scenario) in which the first terminal and the second terminal are served by a same base station, disallowing transmission over an SRB 3 and a split SRB 3, that is, from a perspective of the terminal side, the UE does not receive the SRB 3 configured by the base station and the split (split) SRB 3; and from a perspective of the network side, the base station does not support configurations of the SRB 3 and the split SRB 3.

In some embodiments, the first transmission module 310 is configured to receive a first paging indication from the network-side device, where the first paging indication indicates a data transmission mode of the first terminal, and the first paging indication includes at least one of the following:
instructing the first terminal to establish a single path or multiple paths with the network-side device;
in a case that the first terminal is instructed to establish the single path, indicating that the path to be established is a direct path or an indirect path; and
in a case that the first terminal is instructed to establish the multiple paths, instructing to trigger an indirect path addition procedure by using existing direct data or trigger a direct path addition procedure by using existing indirect data or establish both a direct path and an indirect path.

The data transmission apparatus in this embodiment of this application may be an electronic device, for example, an electronic device with an operating system, or may be a component in an electronic device, for example, an integrated circuit or a chip. The electronic device may be a terminal, or may be other devices than a terminal. For example, the terminal may include but is not limited to the foregoing illustrated type of the terminal 11. The other devices may be a server, a network attached storage (Network Attached Storage, NAS), and the like. This is not specifically limited in this embodiment of this application.

The data transmission apparatus provided in this embodiment of this application can implement each process implemented in the method embodiment in FIG. 5, with the same technical effect achieved. To avoid repetition, details are not described herein again.

As shown in FIG. 8, an embodiment of this application provides a data transmission apparatus. The apparatus is applied to a network-side device 400 and includes:
a second transmission module 410, configured to transmit user plane data and/or control plane data with a first terminal through multiple paths, where
the multiple paths include at least a first path and a second path, where the first path is a direct path in which the first terminal directly communicates with the network-side device, and the second path is an indirect path in which the first terminal communicates with the network-side device through a second terminal; or
the first path is an indirect path in which the first terminal communicates with the network-side device through a second terminal, and the second path is a direct path in which the first terminal directly communicates with the network-side device.

In this embodiment of this application, a multi-path establishment procedure may be performed between the first terminal and the network-side device, and different signaling and service data may be transmitted between the first terminal and the network-side device through the multiple paths. Therefore, throughput of communication transmission can be improved, and when link quality of one path is poor, reliability of transmission can be ensured by using other paths with better link quality.

In some embodiments, the second transmission module 410 is configured to: communicate with the first terminal through the first path; and receive a multi-path addition request message sent by the first terminal through the existing first path and request to add the second path, where the multi-path addition request message is sent after the first terminal determines that a path addition condition is met.

In some embodiments, in a case that the first path is the direct path in which the first terminal directly communicates with the network-side device, and that the second path is the indirect path in which the first terminal communicates with the network-side device through the second terminal, the multi-path addition request message further includes first information, and the first information includes at least one of the following:
signal quality between the first terminal and a candidate terminal;
identification information of the candidate terminal;
identification information of a serving cell of the candidate terminal; and
signal quality of the serving cell of the candidate terminal, where
the candidate terminal includes the second terminal.

In some embodiments, the second transmission module 410 is configured to: send a multi-path addition configuration message to the first terminal; and receive a multi-path addition complete message sent by the first terminal; or receive a multi-path addition failure message sent by the first terminal.

In some embodiments, in a case that the first path is the direct path in which the first terminal directly communicates with the network-side device, and that the second path is the indirect path in which the first terminal communicates with the network-side device through the second terminal, the multi-path addition configuration message includes at least one of the following:
identification information of the second terminal;
identification information of a serving cell of the second terminal;
first indication information for instructing to perform a path switching operation or a path addition operation;
a rule for transmitting the control plane data through the first path and the second path; and
a rule for transmitting the user plane data through the first path and the second path.

In some embodiments, in a case that the first path is an indirect path in which the first terminal communicates with the network-side device through a second terminal, and that the second path is a direct path in which the first terminal directly communicates with the network-side device, the multi-path addition request message further includes first information, and the first information includes at least one of the following:
cell identification information of a candidate cell; and
signal quality of the candidate cell of the first terminal, where
the candidate cell includes a cell in the direct path, of the first terminal.

In some embodiments, in a case that the first path is an indirect path in which the first terminal communicates with the network-side device through a second terminal, and that the second path is a direct path in which the first terminal directly communicates with the network-side device, the multi-path addition configuration message includes at least one of the following:
cell identification information of the direct path;
first indication information for instructing to perform a path switching operation or a path addition operation;
a rule for transmitting the control plane data through the first path and the second path; and
a rule for transmitting the user plane data through the first path and the second path.

In some embodiments, the rules/rule for transmitting the user plane data and/or the control plane data through the first path and the second path are/is specified in a protocol.

In some embodiments, the second transmission module 410 is configured to send path configuration information to the first terminal, where the path configuration information includes the rules/rule for transmitting the user plane data and/or the control plane data through the first path and the second path.

In some embodiments, the rule includes at least one of the following:
a rule for transmitting signaling through the first path and the second path;
a rule for transmitting uplink data and/or downlink data through the first path and the second path;
a rule for simultaneously transmitting different parts of a signaling radio bearer SRB 1 in the first path and the second path;
a rule for simultaneously transmitting a duplicated SRB 1 in the first path and the second path;
a rule for simultaneously transmitting different parts of a data radio bearer DRB in the first path and the second path; and
a rule for simultaneously transmitting a duplicated DRB in the first path and the second path.

In some embodiments, the rule further includes:
in a scenario (intra-gNB scenario) in which the first terminal and the second terminal are served by a same base station, disallowing transmission over an SRB 3 and a split SRB 3, that is, from a perspective of the terminal side, the UE does not receive the SRB 3 and the split SRB 3 configured by the base station; and from a perspective of the network side, the base station does not support configurations of the SRB 3 and the split SRB 3.

In some embodiments, the second transmission module 410 is configured to send a first paging indication to the first terminal, where the first paging indication indicates a data transmission mode of the first terminal, and the first paging indication includes at least one of the following:
instructing the first terminal to establish a single path or multiple paths with the network-side device;
in a case that the first terminal is instructed to establish the single path, indicating that the path to be established is a direct path or an indirect path; and
in a case that the first terminal is instructed to establish the multiple paths, instructing to trigger an indirect path addition procedure by using existing direct data or trigger a direct path addition procedure by using existing indirect data or establish both a direct path and an indirect path.

The data transmission apparatus provided in this embodiment of this application can implement each process implemented in the method embodiment in FIG. 6, with the same technical effect achieved. To avoid repetition, details are not described herein again.

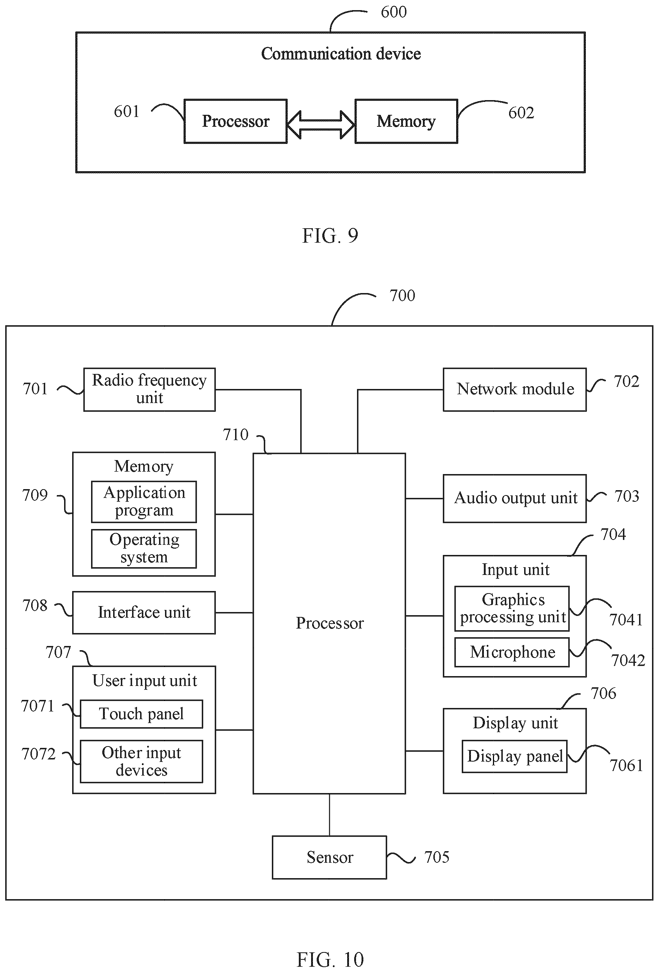

Optionally, as shown in FIG. 9, an embodiment of this application further provides a communication device 600, including a processor 601 and a memory 602. The memory 602 stores a program or instructions capable of running on the processor 601. For example, when the communication device 600 is a network-side device, and the program or instructions are executed by the processor 601, the steps of the foregoing data transmission method embodiment are implemented, with the same technical effect achieved. When the communication device 600 is a terminal, and the program or instructions are executed by the processor 601, the steps of the foregoing data transmission method embodiment are implemented, with the same technical effect achieved. To avoid repetition, details are not described herein again.

An embodiment of this application further provides a network-side device. The network-side device includes a processor and a memory. The memory stores a program or instructions capable of running on the processor. When the program or instructions are executed by the processor, the steps of the foregoing data transmission method are implemented.

An embodiment of this application further provides a network-side device. The network-side device includes a processor and a communication interface. The communication interface is configured to transmit user plane data and/or control plane data with a first terminal through multiple paths, where
the multiple paths include at least a first path and a second path, where the first path is a direct path in which the first terminal directly communicates with the network-side device, and the second path is an indirect path in which the first terminal communicates with the network-side device through a second terminal; or
the first path is an indirect path in which the first terminal communicates with the network-side device through a second terminal, and the second path is a direct path in which the first terminal directly communicates with the network-side device.

An embodiment of this application further provides a terminal. The terminal includes a processor and a memory. The memory stores a program or instructions capable of running on the processor. When the program or instructions are executed by the processor, the steps of the foregoing data transmission method are implemented.

An embodiment of this application further provides a terminal. The terminal includes a processor and a communication interface. The communication interface is configured to transmit user plane data and/or control plane data with a network-side device through multiple paths, where
the multiple paths include at least a first path and a second path, where the first path is a direct path in which a first terminal directly communicates with the network-side device, and the second path is an indirect path in which the first terminal communicates with the network-side device through a second terminal; or
the first path is an indirect path in which a first terminal communicates with the network-side device through a second terminal, and the second path is a direct path in which the first terminal directly communicates with the network-side device.

An embodiment of this application further provides a terminal, including a processor and a communication interface. The terminal embodiment corresponds to the foregoing terminal-side method embodiment, and each implementation process and implementation of the foregoing method embodiment can be applied to the terminal embodiment, with the same technical effect achieved. Specifically, FIG. 10 is a schematic diagram of a hardware structure of a terminal for implementing an embodiment of this application.

The terminal 700 includes but is not limited to at least some components such as a radio frequency unit 701, a network module 702, an audio output unit 703, an input unit 704, a sensor 705, a display unit 706, a user input unit 707, an interface unit 708, a memory 709, and a processor 710.

A person skilled in the art may understand that the terminal 700 may further include a power supply (for example, a battery) supplying power to all components. The power supply may be logically connected to the processor 710 through a power management system. In this way, functions such as charge management, discharge management, and power consumption management are implemented by using the power management system. The terminal structure shown in FIG. 10 does not constitute a limitation on the terminal. The terminal may include more or fewer components than those shown in the figure, or some components are combined, or component arrangements are different. Details are not described herein again.

It should be understood that, in this embodiment of this application, the input unit 704 may include a graphics processing unit (Graphics Processing Unit, GPU) 7041 and a microphone 7042. The graphics processing unit 7041 processes image data of a still picture or video obtained by an image capture apparatus (such as a camera) in a video capture mode or an image capture mode. The display unit 706 may include a display panel 7061, and the display panel 7061 may be configured in a form of a liquid crystal display, an organic light-emitting diode, or the like. The user input unit 707 includes at least one of a touch panel 7071 and other input devices 7072. The touch panel 7071 is also referred to as a touchscreen. The touch panel 7071 may include two parts: a touch detection apparatus and a touch controller. The other input devices 7072 may include but are not limited to a physical keyboard, a function button (such as a volume control button or a power button), a trackball, a mouse, and a joystick. Details are not described herein again.

In this embodiment of this application, after receiving downlink data from a network-side device, the radio frequency unit 701 may transmit the downlink data to the processor 710 for processing. In addition, the radio frequency unit 701 may send uplink data to the network-side device. Usually, the radio frequency unit 701 includes but is not limited to an antenna, an amplifier, a transceiver, a coupler, a low noise amplifier, a duplexer, and the like.

The memory 709 may be configured to store software programs or instructions and various data. The memory 709 may primarily include a first storage area for storing programs or instructions and a second storage area for storing data. The first storage area may store an operating system, an application program or instructions required by at least one function (such as an audio play function and an image play function), and the like. In addition, the memory 709 may include a volatile memory or a non-volatile memory, or the memory 709 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data rate SDRAM, DDR SDRAM), an enhanced synchronous dynamic random access memory (Enhanced SDRAM, ESDRAM), a synchlink dynamic random access memory (Synch Link DRAM, SLDRAM), and a direct rambus random access memory (Direct Rambus RAM, DRRAM). The memory 709 in this embodiment of this application includes but is not limited to these and any other suitable types of memories.

The processor 710 may include one or more processing units. Optionally, the processor 710 integrates an application processor and a modem processor. The application processor mainly processes operations related to the operating system, a user interface, an application program, and the like. The modem processor mainly processes a wireless communication signal. For example, the modem processor is a baseband processor. It may be understood that the modem processor may alternatively be not integrated in the processor 710.

In some embodiments, the processor 710 is configured to transmit user plane data and/or control plane data with a network-side device through multiple paths, where
the multiple paths include at least a first path and a second path, where the first path is a direct path in which a first terminal directly communicates with the network-side device, and the second path is an indirect path in which the first terminal communicates with the network-side device through a second terminal; or
the first path is an indirect path in which a first terminal communicates with the network-side device through a second terminal, and the second path is a direct path in which the first terminal directly communicates with the network-side device.

In some embodiments, the processor 710 is configured to: communicate with the network-side device through the first path; and
in a case that a path addition condition is met, send a multi-path addition request message to the network-side device through the existing first path, requesting to add the second path.

In some embodiments, in a case that the first path is the direct path in which the first terminal directly communicates with the network-side device, and that the second path is the indirect path in which the first terminal communicates with the network-side device through the second terminal, the path addition condition includes at least one of the following:
a data buffer size of the first terminal is greater than or equal to a first threshold;
a service reliability requirement of the first terminal is greater than or equal to a second threshold;
an upper layer of the first terminal indicates that a service of the first terminal is transmitted through the second path or through the first path and the second path;
a first paging indication is received from the network-side device;
a second indication is received from the network-side device, where the second indication is used to indicate that the network-side device supports a multi-path function; and
link quality of at least one candidate terminal meets a preset communication condition, where
the at least one candidate terminal includes the second terminal.

In some embodiments, that link quality of at least one candidate terminal meets a preset communication condition includes at least one of the following:
signal quality between the candidate terminal and the first terminal meets the preset communication condition; and
signal quality of a serving cell of the candidate terminal meets the preset communication condition.

In some embodiments, the multi-path addition request message further includes first information, and the first information includes at least one of the following:
signal quality between the first terminal and the candidate terminal;
identification information of the candidate terminal;
identification information of a serving cell of the candidate terminal; and
signal quality of the serving cell of the candidate terminal.

In some embodiments, the processor 710 is configured to: receive a multi-path addition configuration message returned by the network-side device; and send a multi-path addition complete message to the network-side device; or send a multi-path addition failure message to the network-side device.

In some embodiments, in a case that the first path is the direct path in which the first terminal directly communicates with the network-side device, and that the second path is the indirect path in which the first terminal communicates with the network-side device through the second terminal, the multi-path addition configuration message includes at least one of the following:
identification information of the second terminal;
identification information of a serving cell of the second terminal;
first indication information for instructing to perform a path switching operation or a path addition operation;
a rule for transmitting the control plane data through the first path and the second path; and
a rule for transmitting the user plane data through the first path and the second path.

In some embodiments, in a case that the first path is an indirect path in which the first terminal communicates with the network-side device through a second terminal, and that the second path is a direct path in which the first terminal directly communicates with the network-side device, the path addition condition includes at least one of the following:
a data buffer size of the first terminal is greater than or equal to a first threshold;
a service reliability requirement of the first terminal is greater than or equal to a second threshold;
an upper layer of the first terminal indicates that a service of the first terminal is transmitted through the second path or through the first path and the second path;
a first paging indication is received from the network-side device;
a second indication is received from the network-side device, where the second indication is used to indicate that the network-side device supports a multi-path function; and
at least one candidate cell meets a preset communication condition, where
the at least one candidate cell includes a cell in the direct path, of the first terminal.

In some embodiments, the multi-path addition request message further includes first information, and the first information includes at least one of the following:
cell identification information of the candidate cell; and
signal quality of the candidate cell of the first terminal.

In some embodiments, in a case that the first path is an indirect path in which the first terminal communicates with the network-side device through a second terminal, and that the second path is a direct path in which the first terminal directly communicates with the network-side device, the multi-path addition configuration message includes at least one of the following:
cell identification information of the direct path;
first indication information for instructing to perform a path switching operation or a path addition operation;
a rule for transmitting the control plane data through the first path and the second path; and
a rule for transmitting the user plane data through the first path and the second path.

In some embodiments, the rules/rule for transmitting the user plane data and/or the control plane data through the first path and the second path are/is specified in a protocol.

In some embodiments, the processor 710 is configured to receive path configuration information from the network-side device, where the path configuration information includes the rules/rule for transmitting the user plane data and/or the control plane data through the first path and the second path.

In some embodiments, the rule includes at least one of the following:
a rule for transmitting signaling through the first path and the second path;
a rule for transmitting uplink data and/or downlink data through the first path and the second path;
a rule for simultaneously transmitting different parts of a signaling radio bearer SRB 1 in the first path and the second path;
a rule for simultaneously transmitting a duplicated SRB 1 in the first path and the second path;
a rule for simultaneously transmitting different parts of a data radio bearer DRB in the first path and the second path; and
a rule for simultaneously transmitting a duplicated DRB in the first path and the second path.

In some embodiments, the rule further includes:
in a scenario (intra-gNB scenario) in which the first terminal and the second terminal are served by a same base station, disallowing transmission over an SRB 3 and a split SRB 3, that is, from a perspective of the terminal side, the UE does not receive the SRB 3 and the split SRB 3 configured by the base station; and from a perspective of the network side, the base station does not support configurations of the SRB 3 and the split SRB 3.

In some embodiments, the processor 710 is configured to receive a first paging indication from the network-side device, where the first paging indication indicates a data transmission mode of the first terminal, and the first paging indication includes at least one of the following:
instructing the first terminal to establish a single path or multiple paths with the network-side device;
in a case that the first terminal is instructed to establish the single path, indicating that the path to be established is a direct path or an indirect path; and
in a case that the first terminal is instructed to establish the multiple paths, instructing to trigger an indirect path addition procedure by using existing direct data or trigger a direct path addition procedure by using existing indirect data or establish both a direct path and an indirect path.

An embodiment of this application further provides a network-side device, including a processor and a communication interface. The network-side device embodiment corresponds to the foregoing method embodiment of the network-side device, and each implementation process and implementation of the foregoing method embodiment can be applied to the network-side device embodiment, with the same technical effect achieved.

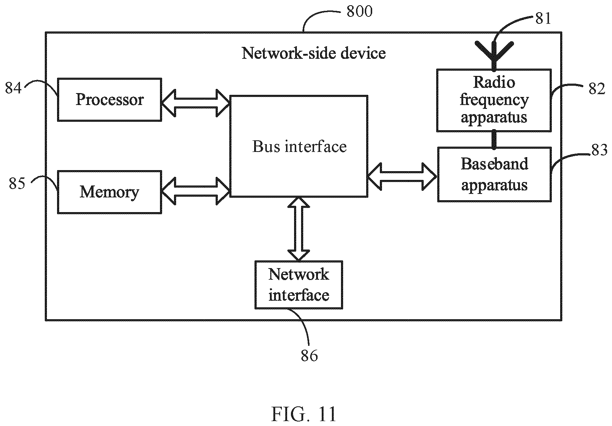

Specifically, an embodiment of this application further provides a network-side device. As shown in FIG. 11, the network-side device 800 includes an antenna 81, a radio frequency apparatus 82, a baseband apparatus 83, a processor 84, and a memory 85. The antenna 81 is connected to the radio frequency apparatus 82. In an uplink direction, the radio frequency apparatus 82 receives information by using the antenna 81, and sends the received information to the baseband apparatus 83 for processing. In a downlink direction, the baseband apparatus 83 processes to-be-sent information, and sends the information to the radio frequency apparatus 82; and the radio frequency apparatus 82 processes the received information and then sends the information out by using the antenna 81.

The method performed by the network-side device in the foregoing embodiment may be implemented in the baseband apparatus 83. The baseband apparatus 83 includes a baseband processor.

The baseband apparatus 83 may include, for example, at least one baseband unit, where a plurality of chips are disposed on the baseband unit. As shown in FIG. 11, one of the chips is, for example, the baseband processor, connected to the memory 85 by using a bus interface, to invoke a program in the memory 85 to perform the operation of the network device shown in the foregoing method embodiment.

The network-side device may further include a network interface 86, where the interface is, for example, a common public radio interface (common public radio interface, CPRI).

Specifically, the network-side device 800 in this embodiment of the present invention further includes a program or instructions stored in the memory 85 and capable of running on the processor 84. When the processor 84 invokes the program or instructions in the memory 85, the foregoing data transmission method is performed, with the same technical effect achieved. To avoid repetition, details are not described herein again.

An embodiment of this application further provides a readable storage medium. The readable storage medium stores a program or instructions. When the program or instructions are executed by a processor, each process of the foregoing data transmission method embodiment is implemented, with the same technical effect achieved. To avoid repetition, details are not described herein again.

The processor is a processor in the terminal in the foregoing embodiment. The readable storage medium includes a computer-readable storage medium, such as a computer read-only memory ROM, a random access memory RAM, a magnetic disk, or an optical disc.

In addition, an embodiment of this application provides a chip. The chip includes a processor and a communication interface. The communication interface is coupled to the processor. The processor is configured to run a program or instructions to implement each process of the foregoing data transmission method embodiment, with the same technical effect achieved. To avoid repetition, details are not described herein again.

It should be understood that the chip provided in this embodiment of this application may also be referred to as a system-level chip, a system chip, a chip system, a system-on-chip, or the like.

In addition, an embodiment of this application provides a computer program or program product. The computer program or program product is stored in a storage medium. The computer program or program product is executed by at least one processor to implement each process of the foregoing data transmission method embodiment, with the same technical effect achieved. To avoid repetition, details are not described herein again.

An embodiment of this application further provides a data transmission system, including a network-side device and a terminal. The network-side device may be configured to perform the steps of the foregoing data transmission method. The terminal may be configured to perform the steps of the foregoing data transmission method.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraints of the technical solution. A person skilled in the art may use different methods to implement the described functions for each particular application, but it should not be considered that the implementation goes beyond the scope of the present disclosure.

A person skilled in the art may clearly understand that, for the purpose of convenient and brief description, for a detailed working process of the foregoing system, apparatus, and unit, refer to a corresponding process in the foregoing method embodiments, and details are not described herein again.

In the embodiments provided in this application, it should be understood that the disclosed apparatus and method may be implemented in other manners. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected depending on actual requirements, to achieve the objectives of the solutions in the embodiments.

In addition, functional units in the embodiments of the present disclosure may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of the present disclosure substantially or parts contributing to the prior art or parts of the technical solutions may be embodied in a form of a software product, and the computer software product is stored in a storage medium, including several instructions for enabling a computer device (which may be a personal computer, a server, a network device, or the like) to perform all or a part of the steps of the method in each embodiment of the present disclosure. The foregoing storage medium includes: any medium that can store program code, such as a USB flash drive, a removable hard disk, a ROM, a RAM, a magnetic disk, or an optical disc.

A person of ordinary skill in the art may understand that all or a part of the procedures of the foregoing method embodiments may be implemented by related hardware controlled by a computer program. The program may be stored in a computer-readable storage medium. When the program is executed, the procedures of the foregoing method embodiments may be performed. The storage medium may include a magnetic disk, an optical disc, a read-only memory (Read-Only Memory, ROM), a random access memory (Random Access Memory, RAM), or the like.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

## Claims

1. A data transmission method, comprising:
transmitting, by a first terminal, user plane data and/or control plane data with a network-side device through multiple paths, wherein
the multiple paths comprise at least a first path and a second path, wherein the first path is a direct path in which the first terminal directly communicates with the network-side device, and the second path is an indirect path in which the first terminal communicates with the network-side device via a second terminal; or
the first path is an indirect path in which the first terminal communicates with the network-side device via a second terminal, and the second path is a direct path in which the first terminal directly communicates with the network-side device.

2. The data transmission method according to claim 1, wherein before the transmitting, by a first terminal, user plane data and/or control plane data with a network-side device through multiple paths, the method comprises:
communicating, by the first terminal, with the network-side device through the first path; and
in a case that a path addition condition is met, sending, by the first terminal, a multi-path addition request message to the network-side device through the existing first path, requesting to add the second path.

3. The data transmission method according to claim 2, wherein in a case that the first path is the direct path in which the first terminal directly communicates with the network-side device, and that the second path is the indirect path in which the first terminal communicates with the network-side device via the second terminal, the path addition condition comprises at least one of the following:
a data buffer size of the first terminal is greater than or equal to a first threshold;
a service reliability requirement of the first terminal is greater than or equal to a second threshold;
an upper layer of the first terminal indicates that a service of the first terminal is transmitted through the second path or through the first path and the second path;
a first paging indication is received from the network-side device;
a second indication is received from the network-side device, wherein the second indication is used to indicate that the network-side device supports a multi-path function; and
link quality of at least one candidate terminal meets a preset communication condition, wherein
the at least one candidate terminal comprises the second terminal.

4. The data transmission method according to claim 3, wherein that link quality of at least one candidate terminal meets a preset communication condition comprises at least one of the following:
signal quality between the candidate terminal and the first terminal meets the preset communication condition; and
signal quality of a serving cell of the candidate terminal meets the preset communication condition.

5. The data transmission method according to claim 3, wherein the multi-path addition request message further comprises first information, and the first information comprises at least one of the following:
signal quality between the first terminal and the candidate terminal;
identification information of the candidate terminal;
identification information of a serving cell of the candidate terminal; and
signal quality of the serving cell of the candidate terminal.

6. The data transmission method according to claim 2, wherein before the transmitting, by a first terminal, user plane data and/or control plane data with a network-side device through multiple paths, the method further comprises:
receiving, by the first terminal, a multi-path addition configuration message returned by the network-side device; and
sending, by the first terminal, a multi-path addition complete message to the network-side device;
or
receiving, by the first terminal, a multi-path addition configuration message returned by the network-side device; and
sending, by the first terminal, a multi-path addition failure message to the network-side device.

7. The data transmission method according to claim 6, wherein in a case that the first path is the direct path in which the first terminal directly communicates with the network-side device, and that the second path is the indirect path in which the first terminal communicates with the network-side device through the second terminal, the multi-path addition configuration message comprises at least one of the following:
identification information of the second terminal;
identification information of a serving cell of the second terminal;
first indication information for instructing to perform a path switching operation or a path addition operation;
a rule for transmitting the control plane data through the first path and the second path; and
a rule for transmitting the user plane data through the first path and the second path.

8. The data transmission method according to claim 2, wherein in a case that the first path is an indirect path in which the first terminal communicates with the network-side device through a second terminal, and that the second path is a direct path in which the first terminal directly communicates with the network-side device, the path addition condition comprises at least one of the following:
a data buffer size of the first terminal is greater than or equal to a first threshold;
a service reliability requirement of the first terminal is greater than or equal to a second threshold;
an upper layer of the first terminal indicates that a service of the first terminal is transmitted through the second path or through the first path and the second path;
a first paging indication is received from the network-side device;
a second indication is received from the network-side device, wherein the second indication is used to indicate that the network-side device supports a multi-path function; and
at least one candidate cell meets a preset communication condition, wherein
the at least one candidate cell comprises a cell in the direct path, of the first terminal.

9. The data transmission method according to claim 8, wherein the multi-path addition request message further comprises first information, and the first information comprises at least one of the following:
cell identification information of the candidate cell; and
signal quality of the candidate cell of the first terminal.

10. The data transmission method according to claim 6, wherein in a case that the first path is an indirect path in which the first terminal communicates with the network-side device through a second terminal, and that the second path is a direct path in which the first terminal directly communicates with the network-side device, the multi-path addition configuration message comprises at least one of the following:
cell identification information of the direct path;
first indication information for instructing to perform a path switching operation or a path addition operation;
a rule for transmitting the control plane data through the first path and the second path; and
a rule for transmitting the user plane data through the first path and the second path.

11. The data transmission method according to claim 7 or 10, wherein the rules/rule for transmitting the user plane data and/or the control plane data through the first path and the second path are/is specified in a protocol.

12. The data transmission method according to claim 7 or 10, wherein the method further comprises:
receiving, by the first terminal, path configuration information from the network-side device, wherein the path configuration information comprises the rules/rule for transmitting the user plane data and/or the control plane data through the first path and the second path.

13. The data transmission method according to claim 7 or 10, wherein the rule comprises at least one of the following:
a rule for transmitting signaling through the first path and the second path;
a rule for transmitting uplink data and/or downlink data through the first path and the second path;
a rule for simultaneously transmitting different parts of a signaling radio bearer SRB 1 in the first path and the second path;
a rule for simultaneously transmitting a duplicated SRB 1 in the first path and the second path;
a rule for simultaneously transmitting different parts of a data radio bearer DRB in the first path and the second path; and
a rule for simultaneously transmitting a duplicated DRB in the first path and the second path.

14. The data transmission method according to claim 13, wherein the rule further comprises:
in a scenario in which the first terminal and the second terminal are served by a same base station, disallowing transmission over an SRB 3 and a split SRB 3.

15. The data transmission method according to claim 1, wherein before the transmitting, by a first terminal, user plane data and/or control plane data with a network-side device through multiple paths, the method further comprises:
receiving, by the first terminal, a first paging indication from the network-side device, wherein the first paging indication indicates a data transmission mode of the first terminal, and the first paging indication comprises at least one of the following:
instructing the first terminal to establish a single path or multiple paths with the network-side device;
in a case that the first terminal is instructed to establish the single path, indicating that the path to be established is a direct path or an indirect path; and
in a case that the first terminal is instructed to establish the multiple paths, instructing to trigger an indirect path addition procedure by using existing direct data or trigger a direct path addition procedure by using existing indirect data or establish both a direct path and an indirect path.

16. A data transmission method, comprising:
transmitting, by a network-side device, user plane data and/or control plane data with a first terminal through multiple paths, wherein
the multiple paths comprise at least a first path and a second path, wherein the first path is a direct path in which the first terminal directly communicates with the network-side device, and the second path is an indirect path in which the first terminal communicates with the network-side device through a second terminal; or
the first path is an indirect path in which the first terminal communicates with the network-side device through a second terminal, and the second path is a direct path in which the first terminal directly communicates with the network-side device.

17. The data transmission method according to claim 16, wherein before the transmitting, by a network-side device, user plane data and/or control plane data with a first terminal through multiple paths, the method comprises:
communicating, by the network-side device, with the first terminal through the first path; and
receiving, by the network-side device, a multi-path addition request message sent by the first terminal through the existing first path and requesting to add the second path, wherein the multi-path addition request message is sent after the first terminal determines that a path addition condition is met.

18. The data transmission method according to claim 17, wherein in a case that the first path is the direct path in which the first terminal directly communicates with the network-side device, and that the second path is the indirect path in which the first terminal communicates with the network-side device through the second terminal, the multi-path addition request message further comprises first information, and the first information comprises at least one of the following:
signal quality between the first terminal and a candidate terminal;
identification information of the candidate terminal;
identification information of a serving cell of the candidate terminal; and
signal quality of the serving cell of the candidate terminal, wherein
the candidate terminal comprises the second terminal.

19. The data transmission method according to claim 17, wherein before the transmitting, by a network-side device, user plane data and/or control plane data with a first terminal through multiple paths, the method further comprises:
sending, by the network-side device, a multi-path addition configuration message to the first terminal; and
receiving, by the network-side device, a multi-path addition complete message sent by the first terminal;
or
sending, by the network-side device, a multi-path addition configuration message to the first terminal; and
receiving, by the network-side device, a multi-path addition failure message sent by the first terminal.

20. The data transmission method according to claim 19, wherein in a case that the first path is the direct path in which the first terminal directly communicates with the network-side device, and that the second path is the indirect path in which the first terminal communicates with the network-side device through the second terminal, the multi-path addition configuration message comprises at least one of the following:
identification information of the second terminal;
identification information of a serving cell of the second terminal;
first indication information for instructing to perform a path switching operation or a path addition operation;
a rule for transmitting the control plane data through the first path and the second path; and
a rule for transmitting the user plane data through the first path and the second path.

21. The data transmission method according to claim 17, wherein in a case that the first path is an indirect path in which the first terminal communicates with the network-side device through a second terminal, and that the second path is a direct path in which the first terminal directly communicates with the network-side device, the multi-path addition request message further comprises first information, and the first information comprises at least one of the following:
cell identification information of a candidate cell; and
signal quality of the candidate cell of the first terminal, wherein
the candidate cell comprises a cell in the direct path, of the first terminal.

22. The data transmission method according to claim 19, wherein in a case that the first path is an indirect path in which the first terminal communicates with the network-side device through a second terminal, and that the second path is a direct path in which the first terminal directly communicates with the network-side device, the multi-path addition configuration message comprises at least one of the following:
cell identification information of the direct path;
first indication information for instructing to perform a path switching operation or a path addition operation;
a rule for transmitting the control plane data through the first path and the second path; and
a rule for transmitting the user plane data through the first path and the second path.

23. The data transmission method according to claim 20 or 22, wherein the rules/rule for transmitting the user plane data and/or the control plane data through the first path and the second path are/is specified in a protocol.

24. The data transmission method according to claim 20 or 22, wherein the method further comprises:
sending, by the network-side device, path configuration information to the first terminal, wherein the path configuration information comprises the rules/rule for transmitting the user plane data and/or the control plane data through the first path and the second path.

25. The data transmission method according to claim 20 or 22, wherein the rule comprises at least one of the following:
a rule for transmitting signaling through the first path and the second path;
a rule for transmitting uplink data and/or downlink data through the first path and the second path;
a rule for simultaneously transmitting different parts of a signaling radio bearer SRB 1 in the first path and the second path;
a rule for simultaneously transmitting a duplicated SRB 1 in the first path and the second path;
a rule for simultaneously transmitting different parts of a data radio bearer DRB in the first path and the second path; and
a rule for simultaneously transmitting a duplicated DRB in the first path and the second path.

26. The data transmission method according to claim 25, wherein the rule further comprises:
in a scenario in which the first terminal and the second terminal are served by a same base station, disallowing transmission over an SRB 3 and a split SRB 3.

27. The data transmission method according to claim 16, wherein before the transmitting, by a network-side device, user plane data and/or control plane data with a first terminal through multiple paths, the method further comprises:
sending, by the network-side device, a first paging indication to the first terminal, wherein the first paging indication indicates a data transmission mode of the first terminal, and the first paging indication comprises at least one of the following:
instructing the first terminal to establish a single path or multiple paths with the network-side device;
in a case that the first terminal is instructed to establish the single path, indicating that the path to be established is a direct path or an indirect path; and
in a case that the first terminal is instructed to establish the multiple paths, instructing to trigger an indirect path addition procedure by using existing direct data or trigger a direct path addition procedure by using existing indirect data or establish both a direct path and an indirect path.

28. The data transmission method according to claim 16, wherein before the transmitting, by a network-side device, user plane data and/or control plane data with a first terminal through multiple paths, the method further comprises:
sending, by the network-side device, a second indication by using a system broadcast message and/or a radio resource control RRC dedicated message, wherein the second indication is used to indicate that the network-side device supports a multi-path function.

29. A data transmission apparatus, comprising:
a first transmission module, configured to transmit user plane data and/or control plane data with a network-side device through multiple paths, wherein
the multiple paths comprise at least a first path and a second path, wherein the first path is a direct path in which a first terminal directly communicates with the network-side device, and the second path is an indirect path in which the first terminal communicates with the network-side device through a second terminal; or
the first path is an indirect path in which a first terminal communicates with the network-side device through a second terminal, and the second path is a direct path in which the first terminal directly communicates with the network-side device.

30. A data transmission apparatus, comprising:
a second transmission module, configured to transmit user plane data and/or control plane data with a first terminal through multiple paths, wherein
the multiple paths comprise at least a first path and a second path, wherein the first path is a direct path in which the first terminal directly communicates with a network-side device, and the second path is an indirect path in which the first terminal communicates with the network-side device through a second terminal; or
the first path is an indirect path in which the first terminal communicates with a network-side device through a second terminal, and the second path is a direct path in which the first terminal directly communicates with the network-side device.

31. A terminal, comprising a processor and a memory, wherein the memory stores a program or instructions capable of running on the processor, and when the program or instructions are executed by the processor, the steps of the data transmission method according to any one of claims 1 to 15 are implemented.

32. A network-side device, comprising a processor and a memory, wherein the memory stores a program or instructions capable of running on the processor, and when the program or instructions are executed by the processor, the steps of the data transmission method according to any one of claims 16 to 28 are implemented.

33. A readable storage medium, wherein the readable storage medium stores a program or instructions, and when the program or instructions are executed by a processor, the steps of the data transmission method according to any one of claims 1 to 15 are implemented, or the steps of the data transmission method according to any one of claims 16 to 28 are implemented.
